# FASCICULE DE BREVET EUROPEEN

(11) **EP 3 676 589 B1**
(45) Date de publication et mention de la délivrance du brevet: **08.03.2023**
(21) Numéro de dépôt: 18768786.8
(22) Date de dépôt: 23.08.2018
(51) Int. Cl.: G01M 3/20, F04C 23/00, F04C 18/12

(54) **DÉTECTEUR DE FUITES ET PROCÉDÉ DE DÉTECTION DE FUITES POUR LE CONTRÔLE DE L'ÉTANCHÉITÉ D'OBJETS À TESTER**
LECKDETEKTOR UND LECKSUCHVERFAHREN ZUR DICHTHEITSPRÜFUNG VON OBJEKTEN
LEAK DETECTOR AND LEAK DETECTION METHOD FOR LEAK-TESTING OBJECTS

(30) Priorité: 29.08.2017 FR 1757935
(43) Date de publication de la demande: 08.07.2020
(73) Titulaire: Pfeiffer Vacuum, 74000 Annecy (FR)
(72) Inventeur: COULOMB, Julien, 74800 Saint Pierre En Faucigny (FR)
(74) Mandataire: Croonenbroek, Thomas Jakob
(86) Numéro de dépôt international: PCT/EP2018/072818
(87) Numéro de publication internationale: WO 2019/042868

(56) Documents cités:
- DE-A1-102010 033 373
- DE-T2- 69 104 005
- DE-T2- 69 202 951

## Description

La présente invention se rapporte à un détecteur de fuites et à un procédé de détection de fuites pour le contrôle de l'étanchéité d'objets à tester par la technique dite d'aspersion (ou « spraying » en anglais) de gaz traceur.

La technique de détection de fuites par aspersion consiste à évacuer le gaz à l'intérieur de l'objet à tester jusqu'à une pression faible. On crée alors une atmosphère enrichie de gaz traceur autour de l'objet par aspersion. L'intérieur de l'objet à tester est relié à un détecteur de fuites qui vérifie si du gaz traceur peut être retrouvé dans les gaz aspirés.

Cette méthode fait appel à la détection du passage du gaz traceur à travers les éventuelles fuites de l'objet à tester. On utilise généralement l'hélium ou l'hydrogène comme gaz traceur car ces gaz traversent les petites fuites plus aisément que les autres gaz, du fait de la petite taille de leurs molécules et de leurs grandes vitesses de déplacement. Les documents DE69202951, DE69104005 et DE102010033373 divulguent des détecteurs de fuites pour le contrôle de l étanchéité d'objets à tester par aspersion de gaz traceur.

Cette méthode est généralement d'une grande sensibilité.

Cependant, pour éviter les erreurs, pour augmenter la précision et la cadence des mesures, notamment en réduisant le temps d'attente entre deux mesures, le bruit de fond en gaz traceur doit être rapidement le plus faible possible.

Une solution est d'augmenter la capacité de pompage du détecteur de fuites. Toutefois, cela nécessite l'emploi de dispositifs de pompage coûteux et volumineux.

Un des buts de la présente invention est de proposer un détecteur de fuites léger, compact et peu coûteux, permettant d'obtenir un faible bruit de fond en gaz traceur.

A cet effet, l'invention a pour objet un détecteur de fuites pour le contrôle de l'étanchéité d'objets à tester par aspersion de gaz traceur selon la revendication 1.

En abaissant la pression de vide limite dans la pompe à vide primaire, on abaisse le bruit de fond en gaz traceur d'hélium ou d'hydrogène dans le détecteur de gaz. La diminution du bruit de fond en gaz traceur permet d'augmenter la sensibilité de détection de fuites, notamment d'environ 30%. En outre, la capacité d'obtenir un bruit de fond faible permet au détecteur de fuites d'être rapidement opérationnel après la détection d'une grosse fuite, ce qui permet de diminuer le temps d'attente entre deux détections.

Le moyen de pompage annexe permet également d'augmenter la durée de vie de la pompe à vide primaire en la rendant plus robuste vis-à-vis des espèces condensables.

La baisse de pression dans la pompe à vide primaire permet aussi d'abaisser le niveau sonore de la pompe à vide primaire de manière significative et de réduire sa consommation électrique.

Selon une ou plusieurs caractéristiques du détecteur de fuites, prise seule ou en combinaison :
- le détecteur de fuites comporte un capteur de pression configuré pour mesurer la pression dans la ligne de vide,
- le détecteur de fuites comporte une unité de contrôle reliée au capteur de pression,
- le dispositif de pompage comporte une électrovanne de vide limite contrôlable par l'unité de contrôle, l'électrovanne de vide limite raccordant le moyen de pompage annexe à la pompe à vide primaire,
- l'unité de contrôle est configurée pour commander l'ouverture de l'électrovanne de vide limite lorsque la pression mesurée par le capteur de pression est inférieure ou égale à un seuil de basse pression,
- la pompe à vide primaire comporte une pluralité d'étages de pompage montés en série,
- le canal inter-étage raccorde l'avant-dernier étage de pompage de la pompe à vide primaire au dernier étage de pompage de la pompe à vide primaire,
- le détecteur de fuites comporte un dispositif de purge raccordé en dérivation de l'électrovanne de vide limite sur le canal inter-étage,
- le moyen de pompage annexe est raccordé au refoulement de la pompe à vide primaire,
- le moyen de pompage annexe comporte au moins une pompe annexe, telle qu'une pompe à membrane,
- le moyen de pompage annexe comporte un réservoir à vide, une électrovanne de vide limite interposée entre le réservoir à vide et la pompe à vide primaire et une électrovanne de mise sous vide interposée entre le réservoir à vide et l'aspiration de la pompe à vide primaire, les électrovannes de vide limite et de mise sous vide étant contrôlables par une unité de contrôle du détecteur de fuites.

L'invention a aussi pour objet un procédé de détection de fuites pour le contrôle de l'étanchéité d'objets à tester par aspersion de gaz traceur mis en oeuvre dans un détecteur de fuites tel que décrit précédemment, dans lequel on abaisse la pression de vide limite en gaz traceur dans la pompe à vide primaire par le moyen de pompage annexe .

Le procédé de détection de fuites peut être entièrement automatisé.

Selon une ou plusieurs caractéristiques du procédé de détection de fuites, prise seule ou en combinaison :
- on commande l'ouverture d'une électrovanne de vide limite raccordant le moyen de pompage annexe à la pompe à vide primaire, pour abaisser la pression de vide limite en gaz traceur dans la pompe à vide primaire par le moyen de pompage annexe lorsque la pression mesurée dans la ligne de vide est inférieure ou égale à un seuil de basse pression inférieur ou égal à 100Pa, tel que de l'ordre de 50Pa,
- au démarrage du détecteur de fuites, on abaisse la pression dans la ligne de vide au moyen de la pompe à vide primaire et d'une pompe annexe du moyen de pompage annexe,
- on réduit la vitesse de rotation de la pompe à vide primaire lorsque le détecteur de fuites n'est pas utilisé pendant une durée supérieure à une durée prédéfinie et on commande l'ouverture de l'électrovanne de vide limite,
- on abaisse la pression de vide limite dans la pompe à vide primaire par le moyen de pompage annexe pendant un délai prédéfini après la coupure de l'alimentation générale du détecteur de fuites, une alimentation étant fournie par une batterie du détecteur de fuites ou par un moyen de récupération de l'énergie cinétique du détecteur de fuites apte à récupérer l'énergie cinétique de rotation du rotor de la pompe à vide turbomoléculaire sous forme d'énergie électrique.

D'autres avantages et caractéristiques apparaîtront à la lecture de la description suivante d'un mode de réalisation particulier de l'invention, mais nullement limitatif, ainsi que des dessins annexés sur lesquels :
Figure 1 représente une vue schématique d'un détecteur de fuites selon un premier exemple de réalisation.
Figure 2 représente un organigramme d'un procédé de détection de fuites pour le contrôle de l'étanchéité d'objets à tester par aspersion de gaz traceur mis en oeuvre dans un détecteur de fuites comme celui de la Figure 1.
Figure 3 montre une vue schématique d'un détecteur de fuites selon un deuxième exemple de réalisation.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

On définit par pompe à vide primaire, une pompe à vide volumétrique, qui aspire, transfère puis refoule le gaz à pomper à la pression atmosphérique.

On entend par « en amont », un élément qui est placé avant un autre par rapport au sens de circulation du gaz. A contrario, on entend par « en aval », un élément placé après un autre par rapport au sens de circulation du gaz à pomper, l'élément situé en amont étant à une pression plus basse que l'élément situé en aval.

On définit par « vide limite », la pression minimale obtenue par la pompe à vide primaire lorsqu'aucun flux de gaz n'est introduit, excepté ceux d'éventuels flux de gaz parasites et négligeables.

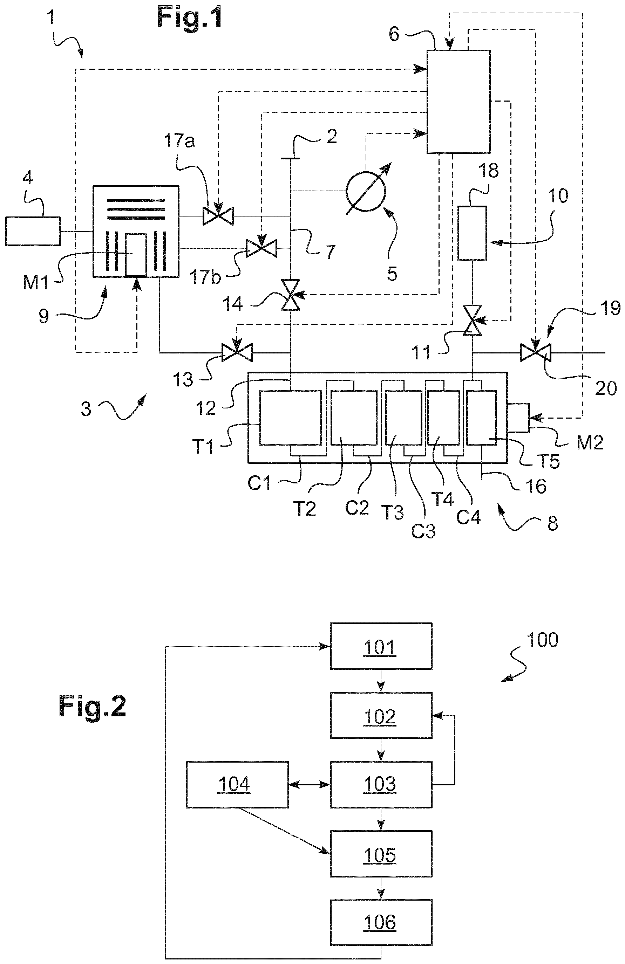

La Figure 1 montre un détecteur de fuites 1 pour le contrôle de l'étanchéité d'objets à tester par aspersion de gaz traceur.

Le détecteur de fuites 1 comporte une entrée de détection 2 destinée à être raccordée à un objet à tester, un dispositif de pompage 3, un détecteur de gaz 4, un capteur de pression 5 et une unité de contrôle 6 reliée au capteur de pression 5.

Le dispositif de pompage 3 comporte une ligne de vide 7 raccordée à l'entrée de détection 2, une pompe à vide primaire 8 raccordée à la ligne de vide 7, une pompe à vide turbomoléculaire 9 raccordée à la ligne de vide 7 et un moyen de pompage annexe 10. Le dispositif de pompage 3 peut en outre comporter une électrovanne de vide limite 11 contrôlable par l'unité de contrôle 6, l'électrovanne de vide limite 11 raccordant le moyen de pompage annexe 10 à la pompe à vide primaire 8.

La pompe à vide turbomoléculaire 9 comporte un rotor, un stator et un moteur M1. Le rotor est entrainé en rotation dans le stator par le moteur M1 lorsque le moteur M1 est alimenté par l'alimentation générale du détecteur de fuites 1.

Le détecteur de gaz 4 est raccordé à la pompe à vide turbomoléculaire 9, par exemple à son aspiration. Le détecteur de gaz 4 comporte par exemple un spectromètre de masse.

Le refoulement de la pompe à vide turbomoléculaire 9 est raccordé à l'aspiration 12 de la pompe à vide primaire 8 via une première électrovanne d'isolation 13 du dispositif de pompage 3. La première électrovanne d'isolation 13 est contrôlable par l'unité de contrôle 6.

L'aspiration 12 de la pompe à vide primaire 8 est également raccordée à l'entrée de détection 2 via une deuxième électrovanne d'isolation 14 du dispositif de pompage 3, contrôlable par l'unité de contrôle 6. Plus précisément, le refoulement de la pompe à vide turbomoléculaire 9 est raccordé via la première électrovanne d'isolation 13 entre la deuxième électrovanne d'isolation 14 et l'aspiration 12 de la pompe à vide primaire 8.

La deuxième électrovanne d'isolation 14 permet le prévidage de la ligne de vide 7 du détecteur de fuites 1.

La pompe à vide primaire 8 comporte une pluralité d'étages de pompage T1-T5 montés en série les uns à la suite des autres, par exemple cinq, entre l'aspiration 12 et un refoulement 16 de la pompe 8 et dans lesquels un gaz à pomper peut circuler.

Chaque étage de pompage T1-T5 comprend une entrée et une sortie respectives. Les étages de pompage successifs T1-T5 sont raccordés en série les uns à la suite des autres par des canaux inter-étages C1-C4 respectifs raccordant la sortie (ou le refoulement) de l'étage de pompage qui précède à l'entrée (ou l'aspiration) de l'étage qui suit. Les stators des étages de pompage T1-T5 forment un corps de la pompe à vide primaire 8. La pression au refoulement 16 de la pompe à vide primaire 8 est la pression atmosphérique. La pompe à vide primaire 8 comporte en outre un clapet anti-retour en sortie du dernier étage de pompage T5, pour éviter le retour des gaz pompés dans la pompe à vide 8. Les étages de pompage T1-T5 présentent un volume engendré, c'est-à-dire un volume de gaz pompé, décroissant (ou égal) avec les étages de pompage, le premier étage de pompage T1 présentant le débit engendré le plus élevé et le dernier étage de pompage T5 présentant le débit engendré le plus faible. La pompe à vide primaire 8 présente par exemple une capacité de pompage comprise entre 20m³/h et 50m³/h, telle que de l'ordre de 40m³/h.

Selon un exemple de réalisation, la pompe à vide primaire 8 comporte deux rotors à lobes rotatifs s'étendant dans les étages de pompage T1-T5. Les arbres des rotors sont entraînés par un moteur M2 de la pompe à vide primaire 8 lorsque le moteur M2 est alimenté par l'alimentation générale du détecteur de fuites 1. Les rotors présentent des lobes de profils identiques, tels que de type « Roots » (section en forme de « huit » ou de « haricot »). Les rotors sont angulairement décalés et entrainés pour tourner de façon synchronisée en sens inverse dans chaque étage T1-T5. Lors de la rotation, le gaz aspiré depuis l'aspiration 12 est emprisonné dans le volume engendré par les rotors et le stator, puis est entraîné par les rotors vers l'étage suivant. La pompe à vide primaire 8 est dite « sèche » car en fonctionnement, les rotors tournent à l'intérieur du stator sans aucun contact mécanique avec le stator, ce qui permet l'absence totale d'huile dans les étages de pompage T1-T5.

Bien entendu, l'invention s'applique également à d'autres types de pompes à vide primaire multi-étagées, telles que de type « Claw » ou de type à spirale (appelée « Scroll » en anglais) ou à vis ou d'un autre principe similaire de pompe à vide volumétrique ou telle qu'une pompe à vide primaire multiétagée à membranes.

L'entrée de détection 2 du détecteur de fuites 1 est raccordée à un étage intermédiaire de la pompe à vide turbomoléculaire 9 via au moins une électrovanne de prélèvement 17a, 17b contrôlable par l'unité de contrôle 6. Le dispositif de pompage 3 comporte par exemple au moins deux électrovannes de prélèvement 17a, 17b, chaque électrovanne 17a, 17b étant raccordée à un étage intermédiaire distinct de la pompe à vide turbomoléculaire 9 de manière à pouvoir adapter le flux de prélèvement au niveau du taux de fuites, l'électrovanne de prélèvement 17a, 17b étant raccordée à une dérivation de la ligne de vide 7 agencée entre l'entrée de détection 2 et la deuxième électrovanne d'isolation 14.

Le capteur de pression 5 est configuré pour mesurer la pression dans la ligne de vide 7, la ligne de vide 7 comprenant les canalisations mettant en communication la au moins une électrovanne de prélèvement 17a, 17b, la deuxième électrovanne d'isolation 14 et l'entrée de détection 2.

L'unité de contrôle 6 comporte un ou plusieurs contrôleurs ou microcontrôleurs ou ordinateurs, comportant des mémoires et programmes adaptés notamment pour commander l'ouverture des électrovannes 17a, 17b, 13, 14, 11. L'unité de contrôle 6 est également apte à gérer une interface utilisateur du détecteur de fuites 1, telle qu'une télécommande et/ou un panneau de contrôle.

Selon un exemple de réalisation, l'unité de contrôle 6 est en outre configurée pour commander l'ouverture de l'électrovanne de vide limite 11 lorsque la pression mesurée par le capteur de pression 5 est inférieure ou égale à un seuil de basse pression pour abaisser la pression de vide limite en gaz traceur dans la pompe à vide primaire 8. L'unité de contrôle 6 commande la fermeture de l'électrovanne de vide limite 11 lorsque la pression mesurée par le capteur de pression 5 est supérieure au seuil de basse pression.

En abaissant la pression de vide limite dans la pompe à vide primaire 8, on abaisse le bruit de fond en gaz traceur d'hélium ou d'hydrogène dans le détecteur de gaz 4. La diminution du bruit de fond en gaz traceur permet d'augmenter la sensibilité de détection de fuites, notamment d'environ 30%. En outre, la capacité d'obtenir un bruit de fond faible permet au détecteur de fuites 1 d'être rapidement opérationnel après la détection d'une grosse fuite, ce qui permet de diminuer le temps d'attente entre deux détections.

La baisse de pression dans la pompe à vide primaire 8 permet aussi d'abaisser le niveau sonore de la pompe à vide primaire 8 de manière significative et de réduire sa consommation électrique.

Dans le premier exemple de réalisation de la Figure 1, le moyen de pompage annexe 10 comporte au moins une pompe annexe 18, telle qu'une pompe à membrane ou une pompe à pistons ou une pompe péristaltique. La pompe annexe 18 est par exemple apte à obtenir une pression de vide limite comprise entre 5000Pa (ou 50mbar) et 20000Pa (ou 200mbar). La pompe annexe 18 présente un faible encombrement, un faible poids et un faible coût, permettant notamment au détecteur de fuites 1 de rester compact, transportable et à un coût maitrisé.

Le moyen de pompage annexe 10 peut être raccordé à l'aspiration 12 de la pompe à vide primaire 8 via l'électrovanne de vide limite 11. Dans ce cas, on prévoit par exemple que le moyen de pompage annexe 10 comporte deux pompes à vide annexe 17, telles que deux pompes à membrane, montées en série.

Selon un autre exemple, le moyen de pompage annexe 10 est raccordé au refoulement 16 de la pompe à vide primaire 8, avant le clapet anti-retour.

Sur l'exemple représenté sur la Figure 1, le moyen de pompage annexe 10 est raccordé à un canal inter-étage C1-C4 de la pompe à vide primaire 8, tel qu'au canal inter-étage C4 raccordant l'avant-dernier étage de pompage T4 au dernier étage de pompage T5.

Raccorder le moyen de pompage annexe 10 au refoulement 16 ou dans les étages de haute pression de la pompe à vide primaire 8, tel qu'au dernier canal inter-étage C4, permet d'être plus efficace en termes de réduction sonore, de l'ordre de 1,5dbA environ, et de réduction de la consommation électrique, de l'ordre de 250W environ.

Raccorder le moyen de pompage annexe 10 à un canal inter-étage C1-C4 et en particulier au dernier canal inter-étage C4 de la pompe à vide primaire 8, permet en outre d'augmenter la durée de vie de la pompe à vide primaire 8 en évacuant les espèces condensables de la pompe à vide primaire 8 dans le moyen de pompage annexe 10. La pompe à vide primaire 8 est ainsi protégée des éventuelles agressions des vapeurs condensables, telles que la vapeur d'eau, pouvant se condenser dans les étages de haute pression de la pompe à vide primaire 8. Il suffit ensuite de remplacer le moyen de pompage annexe 10 lorsqu'il est détérioré, le moyen de pompage annexe 10 étant simple à changer et de faible coût.

En outre, on peut profiter de la présence d'une dérivation sur le canal inter-étage C4 pour raccorder également un dispositif de purge 19 du détecteur de fuites 1.

Le dispositif de purge 19 est raccordé en dérivation de l'électrovanne de vide limite 11 sur le canal inter-étage C4. Le dispositif de purge 19 comporte par exemple une électrovanne de purge 20 contrôlable par l'unité de contrôle 6, interposée entre le canal inter-étage C4 et une source de gaz de purge, tel que de l'azote.

Le dispositif de purge 19 permet d'introduire un gaz de purge entre les étages de pompage T4, T5 de la pompe à vide primaire 8 lorsque le moyen de pompage annexe 10 est isolé du canal inter-étage C4 par la fermeture de l'électrovanne de vide limite 11.

L'injection d'un gaz de purge, notamment au dernier étage de pompage C4, permet de favoriser l'évacuation du gaz traceur et des vapeurs condensables qui peuvent rester accumulés à cet endroit de la pompe à vide primaire 8. Un seul raccord permet ainsi de raccorder le canal inter-étage C4 d'une part, au moyen de pompage annexe 10 et d'autre part, au dispositif de purge 19 pour, soit abaisser la pression de vide limite en gaz traceur dans la pompe à vide primaire 8, soit introduire un gaz de purge dans le canal inter-étage C4.

Nous allons maintenant décrire un exemple de procédé de détection de fuites 100 pour le contrôle de l'étanchéité d'objets à tester par aspersion de gaz traceur mis en oeuvre dans un détecteur de fuites 1 de la Figure 1.

Lorsque l'alimentation générale du détecteur de fuites 1 est coupée, les électrovannes 11, 13, 14, 17a, 17b et 20 sont fermées. La pompe à vide turbomoléculaire 9, la pompe à vide primaire 8 et la pompe annexe 18 sont arrêtées. La pression dans la ligne de vide 7 est la pression atmosphérique.

Au démarrage du détecteur de fuites 1 (Figure 2 ; étape de démarrage 101), lorsque l'utilisateur allume l'alimentation générale du détecteur 1, la première électrovanne d'isolation 13 est commandée en ouverture. La pompe à vide primaire 8 et la pompe à vide turbomoléculaire 9 sont mises en route.

Durant cette étape de démarrage 101, on peut également commander l'ouverture de l'électrovanne de vide limite 11 et mettre en route la pompe annexe 18, pour abaisser la pression dans la ligne de vide 7 au moyen de la pompe à vide primaire 8 et de la pompe annexe 18.

L'utilisation du moyen de pompage annexe 10 en phase de démarrage du détecteur de fuites 1 permet d'atteindre plus rapidement une basse pression et aide à l'amorçage du pompage par la pompe à vide primaire 8. Cela permet d'accélérer la phase de démarrage. Cette aide au démarrage est particulièrement utile en détection de fuites car le détecteur de fuites 1 doit généralement être allumé/éteint à plusieurs reprises en cours d'utilisation. En effet, le rotor de la pompe à vide turbomoléculaire 9 doit être arrêté avant que l'on puisse déplacer le détecteur de fuites 1 sur un nouveau site de détection, pour ne pas risquer d'endommager la pompe à vide turbomoléculaire 9 du fait de l'effet gyroscopique.

Après l'écoulement d'une durée prédéterminée, on peut fermer l'électrovanne de vide limite 11 et éteindre la pompe annexe 18.

Le détecteur de fuites 1 est prêt pour un cycle de mesure.

Lorsque l'utilisateur lance un cycle de mesure, on ouvre la deuxième électrovanne d'isolation 14 interposée entre l'entrée de détection 2 et l'aspiration 12 de la pompe à vide primaire 8 (étape de prévidage 102).

La pression décroit dans la ligne de vide 7.

Selon un exemple de réalisation, lorsque la pression mesurée dans la ligne de vide 7 est inférieure ou égale à un seuil de basse pression par exemple inférieur ou égal à 100Pa (ou 1mbar), tel que de l'ordre de 50Pa (ou 0,5mbars), on commande l'ouverture de l'électrovanne de vide limite 11 et ici, la mise en route de la pompe annexe 18, pour abaisser la pression de vide limite dans la pompe à vide primaire 8 par le moyen de pompage annexe 10. On commande également l'ouverture d'une des électrovannes de prélèvement 17a, 17b pour mettre la pompe à vide turbomoléculaire 9 et le détecteur de gaz 4 en communication avec l'entrée du détecteur 2 (étape de détection 103).

Selon un autre exemple de réalisation, la pompe annexe 18 fonctionne en permanence et abaisse en permanence la pression de vide limite dans la pompe à vide primaire 8. Dans ce cas, l'électrovanne de vide limite 11 est toujours ouverte ou le détecteur de fuites 1 ne comporte pas d'électrovanne de vide limite 11.

L'abaissement de la pression de vide limite dans la pompe à vide primaire 8 par le moyen de pompage annexe 10 permet d'abaisser la pression de vide limite en gaz traceur. Le détecteur de fuites 1 est alors prêt pour réaliser un contrôle d'étanchéité par aspersion.

En cours de test, l'unité de contrôle 6 peut basculer d'électrovanne de prélèvement 17a, 17b en fonction du niveau du taux de fuites de l'objet à tester.

Lorsque la concentration en gaz traceur mesurée par le détecteur de gaz 4 est trop importante, on peut décider de mettre en communication le canal inter-étage C4 avec le dispositif de purge 19 plutôt qu'avec le moyen de pompage annexe 10 afin d'améliorer l'évacuation du gaz traceur, en commandant la fermeture de l'électrovanne de vide limite 11 et l'ouverture de l'électrovanne de purge 20.

En cas de surpression importante, c'est-à-dire lorsque la pression mesurée dans la ligne de vide 7 est supérieure au seuil de basse pression, l'électrovanne de vide limite 11 est commandée en fermeture et la pompe annexe 18 est arrêtée. La pompe à vide turbomoléculaire 9 est isolée de l'entrée de détection 2 en fermant au moins la au moins une électrovanne de prélèvement 17a, 17b. La deuxième électrovanne d'isolation 14 est commandée en ouverture (étape de prévidage 102).

Lorsque le détecteur de fuites 1 n'est pas utilisé pendant une durée supérieure à une durée prédéfinie, on peut prévoir un mode de veille (ou « stand-by » en anglais) dans lequel on réduit la vitesse de rotation de la pompe à vide primaire 8 (étape de veille 104). La diminution de la vitesse de rotation de la pompe à vide primaire 8 permet de réduire la consommation électrique du détecteur de fuites 1 en période d'inutilisation.

Ce mode peut être déclenché manuellement ou peut être détecté et contrôlé par l'unité de contrôle 6.

Dans ce mode de veille, on peut commander l'ouverture de l'électrovanne de vide limite 11 pour abaisser la pression de vide limite dans la pompe à vide primaire 8 par le moyen de pompage annexe 10 et ainsi réduire encore la consommation électrique du détecteur de fuites 1. L'aspiration de la pompe à vide turbomoléculaire 9 est isolée par fermeture de la au moins une électrovanne de prélèvement 17a, 17b.

Lorsque l'opérateur coupe l'alimentation générale du détecteur de fuites 1, les électrovannes 11, 13, 14, 17a, 17b et 20 se ferment et la pompe à vide turbomoléculaire 9, la pompe à vide primaire 8 et la pompe annexe 18 s'arrêtent (étape d'arrêt du détecteur 105).

On peut prévoir d'abaisser la pression de vide limite dans la pompe à vide primaire 8 par le moyen de pompage annexe 10 pendant un délai prédéfini après la coupure de l'alimentation générale du détecteur de fuites 1, en commandant l'ouverture de l'électrovanne de vide limite 11 et ici, la mise en route de la pompe annexe 18 (étape de rallumage 106).

Cette remise en route peut être réalisée une seule fois après l'extinction du détecteur de fuites 1 ou de manière cyclique. Des cycles de « rallumage » du détecteur de fuites 1 peuvent ainsi être programmés par l'unité de contrôle 6 après extinction du détecteur de fuites 1 par exemple dans l'intervalle pendant lequel le détecteur de fuites 1 éteint est déplacé.

L'alimentation de l'électrovanne de vide limite 11, de l'unité de contrôle 6 et de la pompe annexe 18 peut être fournie par une batterie du détecteur de fuites 1.

Selon un autre exemple, cette alimentation peut être fournie par un moyen de récupération d'énergie cinétique du détecteur de fuites 1, configuré pour récupérer l'énergie cinétique de rotation du rotor de la pompe à vide turbomoléculaire 9 sous forme d'énergie électrique et la restituer pour alimenter l'unité de contrôle 6, l'électrovanne de vide limite 11 et la pompe annexe 18. En effet, lorsque l'alimentation générale est coupée, l'énergie cinétique accumulée et l'inertie font que le rotor continue de tourner. Le moteur M1 de la pompe à vide turbomoléculaire 9 peut alors être entrainé mécaniquement en rotation par le rotor, fonctionnant en générateur.

Une telle source d'énergie propre au détecteur 1, par batterie ou par un moyen de récupération de l'énergie cinétique, permet de conserver une alimentation pour le moyen de pompage annexe 10 pendant un délai suffisant pour permettre d'abaisser la pression dans la pompe à vide primaire 9 alors à l'arrêt. On peut ainsi « purger » la pompe à vide primaire 8 du gaz traceur après utilisation.

Le procédé de détection de fuites 100 permet ainsi de diminuer le bruit de fond en gaz traceur par le moyen de pompage annexe 10, ce qui permet d'augmenter la sensibilité de mesure et d'abaisser le temps d'attente entre deux mesures. Le moyen de pompage annexe 10 permet également d'augmenter la durée de vie de la pompe à vide primaire 8 en la rendant plus robuste vis-à-vis des espèces condensables. Le moyen de pompage annexe 10 peut en outre être utilisé pour accélérer la mise sous vide au démarrage du détecteur de fuites, qui peut être relativement fréquent au cours d'une recherche de fuites. Ce même moyen de pompage annexe peut aussi être utilisé pour réduire la consommation électrique lorsque le détecteur de fuites 1 n'est pas utilisé et pour purger la pompe à vide primaire 8 du gaz traceur et des vapeurs condensables après l'arrêt de la pompe à vide primaire 8.

De plus, le procédé de détection de fuites 100 peut être entièrement automatisé.

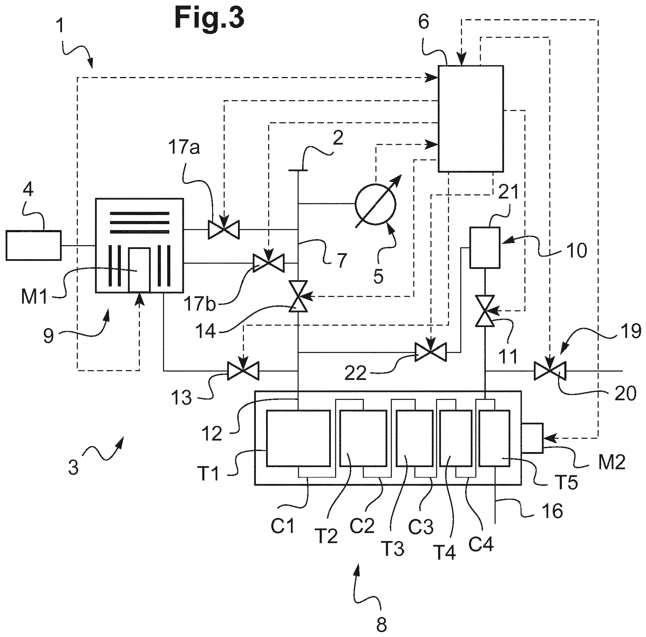

La Figure 3 montre un deuxième exemple de réalisation.

Dans ce deuxième exemple, le moyen de pompage annexe 10 comporte un réservoir à vide 21, une électrovanne de vide limite 11 interposée entre le réservoir à vide 21 et la pompe à vide primaire 8 et une électrovanne de mise sous vide 22 interposée entre le réservoir à vide 21 et l'aspiration 12 de la pompe à vide primaire 8.

Les électrovannes de vide limite 11 et de mise sous vide 22 sont contrôlables par l'unité de contrôle 6.

Le réservoir à vide 21 présente un faible encombrement, par exemple compris entre 100cm³ et 500cm³, un poids et un coût négligeables, permettant au détecteur de fuites 1 de rester compact, transportable et à un coût maitrisé.

Le moyen de pompage annexe 10 peut être raccordé au refoulement 16 de la pompe à vide primaire 8, avant le clapet anti-retour, ou à un canal inter-étage C1-C4 de la pompe à vide primaire 8, tel qu'au canal inter-étage C4 raccordant l'avant-dernier étage de pompage T4 au dernier étage de pompage T5.

Lorsque l'alimentation générale du détecteur de fuites 1 est coupée, les électrovannes 11, 13, 14, 17a, 17b, 20 et 22 sont fermées. La pompe à vide turbomoléculaire 9 et la pompe à vide primaire 8 sont arrêtées. La pression dans la ligne de vide 7 et le réservoir à vide 21 est la pression atmosphérique.

Au démarrage du détecteur de fuites 1 (Figure 2 ; étape de démarrage 101), la première électrovanne d'isolation 13 est commandée en ouverture. La pompe à vide primaire 8 et la pompe à vide turbomoléculaire 9 sont mises en route.

Le détecteur de fuites 1 est prêt pour un cycle de mesure.

Lorsque l'utilisateur lance un cycle de mesure, on ouvre l'électrovanne d'isolation 14 interposée entre l'entrée de détection 2 et l'aspiration 12 de la pompe à vide primaire 8 ainsi que l'électrovanne de mise sous vide 22 (étape de prévidage 102).

La pression décroit dans la ligne de vide 7.

Lorsque la pression mesurée dans la ligne de vide 7 est inférieure ou égale à un seuil de basse pression par exemple inférieur ou égal à 100Pa, tel que de l'ordre de 50Pa, on ferme l'électrovanne de mise sous vide 22 et on commande l'ouverture de l'électrovanne de vide limite 11, par exemple pendant une durée prédéterminée de l'ordre de quelques secondes, pour abaisser la pression de vide limite dans la pompe à vide primaire 8 par le moyen de pompage annexe 10. On commande également l'ouverture d'une des électrovannes de prélèvement 17a, 17b (étape de détection 103).

A l'ouverture de l'électrovanne de vide limite 11, la pression dans le réservoir à vide 21 est de l'ordre du seuil de basse pression, ce qui permet d'abaisser la pression dans la pompe à vide primaire 8.

L'abaissement de la pression de vide limite dans la pompe à vide primaire 8 par le moyen de pompage annexe 10 permet d'abaisser la pression de vide limite en gaz traceur.

Le détecteur de fuites 1 est alors prêt pour réaliser un contrôle d'étanchéité par aspersion.

En cours de test, l'unité de contrôle 6 peut basculer d'électrovanne de prélèvement 17a, 17b en fonction du niveau du taux de fuites de l'objet à tester.

Lorsque la concentration en gaz traceur mesurée par le détecteur de gaz 4 est trop importante, on peut décider de mettre en communication le canal inter-étage C4 avec le dispositif de purge 19 plutôt qu'avec le moyen de pompage annexe 10 afin d'améliorer l'évacuation du gaz traceur. Pendant la purge de la pompe à vide primaire 8, l'électrovanne de vide limite 11 est commandée en fermeture. On peut alors en profiter pour ouvrir l'électrovanne de mise sous vide 22 et ainsi abaisser à nouveau la pression dans le réservoir de vide 21.

En cas de surpression importante, c'est-à-dire lorsque la pression mesurée dans la ligne de vide 7 est supérieure au seuil de basse pression, l'électrovanne de vide limite 11 est commandée en fermeture. La pompe à vide turbomoléculaire 9 est isolée en fermant au moins la au moins une électrovanne de prélèvement 17a, 17b. La deuxième électrovanne d'isolation 14 et l'électrovanne de mise sous vide 22 sont commandées en ouverture (étape de prévidage 102).

Lorsque le détecteur de fuites 1 n'est pas utilisé pendant une durée supérieure à une durée prédéfinie, on peut, comme dans le premier exemple de réalisation, prévoir un mode de veille (ou « stand-by » en anglais) dans lequel on réduit la vitesse de rotation de la pompe à vide primaire 8 (étape de veille 104) et dans lequel on peut commander l'ouverture de l'électrovanne de vide limite 11. Si le réservoir à vide 21 est à basse pression, cela permet d'abaisser la pression de vide limite dans la pompe à vide primaire 8 et ainsi de réduire la consommation électrique du détecteur de fuites 1.

Lorsque l'opérateur coupe l'alimentation générale du détecteur de fuites 1, les électrovannes 11, 13, 14, 17a, 17b, 21 et 22 se ferment et la pompe à vide turbomoléculaire 9 et la pompe à vide primaire 8 s'arrêtent (étape d'arrêt du détecteur 105).

Comme dans le premier exemple de réalisation, on peut prévoir de commander l'ouverture de l'électrovanne de vide limite 11 pendant un délai prédéfini après la coupure de l'alimentation générale du détecteur de fuites 1 (étape de rallumage 106), l'alimentation de l'électrovanne de vide limite 11 et de l'unité de contrôle 6 étant fournie par une batterie ou par un moyen de récupération d'énergie cinétique du détecteur de fuites 1. Si le réservoir à vide 21 est à basse pression, cela permet d'abaisser la pression de vide limite dans la pompe à vide primaire 8 et ainsi de purger la pompe à vide primaire 8 à l'arrêt.

## Revendications

1. Détecteur de fuites (1) pour le contrôle de l'étanchéité d'objets à tester par aspersion de gaz traceur, le détecteur de fuites (1) comprenant :
- une entrée de détection (2) destinée à être raccordée à un objet à tester,
- un dispositif de pompage (3) comportant :
- une ligne de vide (7) raccordée à l'entrée de détection (2),
- une pompe à vide primaire (8) raccordée à la ligne de vide (7) comportant une pluralité d'étages de pompage (T1-T5) montés en série, et
- une pompe à vide turbomoléculaire (9) raccordée à la ligne de vide (7) et dont le refoulement est raccordé à la pompe à vide primaire (8),
- un détecteur de gaz (4) raccordé à la pompe à vide turbomoléculaire (9),
**caractérisé en ce que** le dispositif de pompage (3) comporte un moyen de pompage annexe (10) raccordé à un canal inter-étage (C1-C4) de la pompe à vide primaire (8) pour abaisser la pression de vide limite en gaz traceur dans la pompe à vide primaire (8).

2. Détecteur de fuites (1) selon la revendication précédente, **caractérisé en ce qu'**il comporte un capteur de pression (5) configuré pour mesurer la pression dans la ligne de vide (7) et une unité de contrôle (6) reliée au capteur de pression (5), le dispositif de pompage (3) comportant une électrovanne de vide limite (11) contrôlable par l'unité de contrôle (6), l'électrovanne de vide limite (11) raccordant le moyen de pompage annexe (10) à la pompe à vide primaire (8), l'unité de contrôle (6) étant en outre configurée pour commander l'ouverture de l'électrovanne de vide limite (11) lorsque la pression mesurée par le capteur de pression (5) est inférieure ou égale à un seuil de basse pression.

3. Détecteur de fuites (1) selon l'une des revendications précédentes, **caractérisé en ce que** le canal inter-étage (C4) raccorde l'avant-dernier étage de pompage (T4) de la pompe à vide primaire (8) au dernier étage de pompage (T5) de la pompe à vide primaire (8).

4. Détecteur de fuites (1) selon l'une des revendications précédentes, **caractérisé en ce qu'**il comporte un dispositif de purge (19) raccordé en dérivation de l'électrovanne de vide limite (11) sur le canal inter-étage (C4).

5. Détecteur de fuites (1) selon l'une des revendications précédentes, **caractérisé en ce que** le moyen de pompage annexe (10) comporte au moins une pompe annexe (18), telle qu'une pompe à membrane.

6. Détecteur de fuites (1) selon l'une des revendications 1 à 4, **caractérisé en ce que** le moyen de pompage annexe (10) comporte un réservoir à vide (21), une électrovanne de vide limite (11) interposée entre le réservoir à vide (21) et la pompe à vide primaire (8) et une électrovanne de mise sous vide (22) interposée entre le réservoir à vide (21) et l'aspiration (12) de la pompe à vide primaire (8), les électrovannes de vide limite (11) et de mise sous vide (22) étant contrôlables par une unité de contrôle (6) du détecteur de fuites (1).

7. Procédé de détection de fuites (100) pour le contrôle de l'étanchéité d'objets à tester par aspersion de gaz traceur mis en oeuvre dans un détecteur de fuites (1) selon l'une des revendications précédentes, dans lequel on abaisse la pression de vide limite en gaz traceur dans la pompe à vide primaire (8) par le moyen de pompage annexe (10).

8. Procédé de détection de fuites (100) selon la revendication précédente, dans lequel on commande l'ouverture d'une électrovanne de vide limite (11) raccordant le moyen de pompage annexe (10) à la pompe à vide primaire (8), pour abaisser la pression de vide limite en gaz traceur dans la pompe à vide primaire (8) par le moyen de pompage annexe (10) lorsque la pression mesurée dans la ligne de vide (7) est inférieure ou égale à un seuil de basse pression inférieur ou égal à 100Pa, tel que de l'ordre de 50Pa (étape de détection 103).

9. Procédé de détection de fuites (100) selon l'une des revendications 7 ou 8, dans lequel au démarrage du détecteur de fuites (1), on abaisse la pression dans la ligne de vide (7) au moyen de la pompe à vide primaire (8) et d'une pompe annexe (18) du moyen de pompage annexe (10) (étape de démarrage 101).

10. Procédé de détection de fuites (100) selon l'une des revendications 7 à 9, prise avec la revendication 8, dans lequel on réduit la vitesse de rotation de la pompe à vide primaire (8) lorsque le détecteur de fuites (1) n'est pas utilisé pendant une durée supérieure à une durée prédéfinie et on commande l'ouverture de l'électrovanne de vide limite (11) (étape de veille 104).

11. Procédé de détection de fuites (100) selon l'une des revendications 7 à 10, **caractérisé en ce qu'**on abaisse la pression de vide limite dans la pompe à vide primaire (8) par le moyen de pompage annexe (10) pendant un délai prédéfini après la coupure de l'alimentation générale du détecteur de fuites (1), une alimentation étant fournie par une batterie du détecteur de fuites (1) ou par un moyen de récupération de l'énergie cinétique du détecteur de fuites (1) apte à récupérer l'énergie cinétique de rotation du rotor de la pompe à vide turbomoléculaire (9) sous forme d'énergie électrique (étape de rallumage 106).

## Patentansprüche

1. Leckdetektor (1) für die Prüfung der Dichtheit von Testobjekten durch das Besprühen mit einem Spürgas, wobei der Leckdetektor (1) Folgendes beinhaltet:
- einen Detektionseingang (2), der dazu bestimmt ist, mit einem Testobjekt verbunden zu werden,
- eine Pumpvorrichtung (3), die Folgendes umfasst:
- eine Vakuumleitung (7), die mit dem Detektionseingang (2) verbunden ist,
- eine Vorvakuumpumpe (8), die mit der Vakuumleitung (7) verbunden ist und eine Vielzahl von in Reihe geschalteten Pumpstufen (T1-T5) umfasst, und
- eine Turbomolekular-Vakuumpumpe (9), die mit der Vakuumleitung (7) verbunden ist und deren Druckseite mit der Vorvakuumpumpe (8) verbunden ist,
- einen Gasdetektor (4), der mit der Turbomolekular-Vakuumpumpe (9) verbunden ist,
**dadurch gekennzeichnet, dass** die Pumpvorrichtung (3) ein Zusatzpumpmittel (10) umfasst, das mit einem Stufenverbindungskanal (C1-C4) der Vorvakuumpumpe (8) verbunden ist, um den Spürgas-Endvakuumdruck in der Vorvakuumpumpe (8) abzusenken.

2. Leckdetektor (1) nach dem vorhergehenden Anspruch, **dadurch gekennzeichnet, dass** er einen Drucksensor (5), der dazu konfiguriert ist, den Druck in der Vakuumleitung (7) zu messen, und eine Steuereinheit (6), die an den Drucksensor (5) angeschlossen ist, umfasst, wobei die Pumpvorrichtung (3) ein Endvakuum-Magnetventil (11) umfasst, das durch die Steuereinheit (6) gesteuert werden kann, wobei das Endvakuum-Magnetventil (11) das Zusatzpumpmittel (10) mit der Vorvakuumpumpe (8) verbindet, wobei die Steuereinheit (6) ferner dazu konfiguriert ist, das Öffnen des Endvakuum-Magnetventils (11) anzusteuern, wenn der durch den Drucksensor (5) gemessene Druck kleiner als oder gleich einem Niederdruck-Schwellenwert ist.

3. Leckdetektor (1) nach einem der vorhergehenden Ansprüche, **dadurch gekennzeichnet, dass** der Stufenverbindungskanal (C4) die vorletzte Pumpstufe (T4) der Vorvakuumpumpe (8) mit der letzten Pumpstufe (T5) der Vorvakuumpumpe (8) verbindet.

4. Leckdetektor (1) nach einem der vorhergehenden Ansprüche, **dadurch gekennzeichnet, dass** er eine Spülvorrichtung (19) umfasst, die über einen Abzweig des Endvakuum-Magnetventils (11) mit dem Stufenverbindungskanal (C4) verbunden ist.

5. Leckdetektor (1) nach einem der vorhergehenden Ansprüche, **dadurch gekennzeichnet, dass** das Zusatzpumpmittel (10) mindestens eine Zusatzpumpe (18), wie etwa eine Membranpumpe, umfasst.

6. Leckdetektor (1) nach einem der Ansprüche 1 bis 4, **dadurch gekennzeichnet, dass** das Zusatzpumpmittel (10) einen Vakuumbehälter (21), ein zwischen den Vakuumbehälter (21) und die Vorvakuumpumpe (8) eingefügtes Endvakuum-Magnetventil (11) und ein zwischen den Vakuumbehälter (21) und die Saugseite (12) der Vorvakuumpumpe (8) eingefügtes Evakuierungs-Magnetventil (22) umfasst, wobei das Endvakuum-Magnetventil (11) und das Evakuierungs-Magnetventil (22) durch eine Steuereinheit (6) des Leckdetektors (1) gesteuert werden können.

7. Lecksuchverfahren (100) für die Prüfung der Dichtheit von Testobjekten durch das Besprühen mit einem Spürgas, das in einem Leckdetektor (1) nach einem der vorhergehenden Ansprüche umgesetzt wird, wobei der Spürgas-Endvakuumdruck in der Vorvakuumpumpe (8) durch das Zusatzpumpmittel (10) abgesenkt wird.

8. Lecksuchverfahren (100) nach dem vorhergehenden Anspruch, wobei das Öffnen eines Endvakuum-Magnetventils (11), das das Zusatzpumpmittel (10) mit der Vorvakuumpumpe (8) verbindet, angesteuert wird, um den Spürgas-Endvakuumdruck in der Vorvakuumpumpe (8) mit Hilfe des Zusatzpumpmittels (10) abzusenken, wenn der in der Vakuumleitung (7) gemessene Druck kleiner als oder gleich einem Niederdruck-Schwellenwert ist, der kleiner als oder gleich 100 Pa, wie etwa ungefähr 50 Pa, ist (Detektionsphase 103).

9. Lecksuchverfahren (100) nach einem der Ansprüche 7 oder 8, wobei beim Starten des Leckdetektors (1) der Druck in der Vakuumleitung (7) mit Hilfe der Vorvakuumpumpe (8) und einer Zusatzpumpe (18) des Zusatzpumpmittels (10) abgesenkt wird (Startphase 101).

10. Lecksuchverfahren (100) nach einem der Ansprüche 7 bis 9 zusammen mit Anspruch 8, wobei die Drehzahl der Vorvakuumpumpe (8) reduziert wird, wenn der Leckdetektor (1) während eines Zeitraums, der größer als ein vordefinierter Zeitraum ist, nicht verwendet wird, und das Öffnen des Endvakuum-Magnetventils (11) angesteuert wird (Standby-Phase 104).

11. Lecksuchverfahren (100) nach einem der Ansprüche 7 bis 10, **dadurch gekennzeichnet, dass** der Endvakuumdruck in der Vorvakuumpumpe (8) während einer vordefinierten Zeitspanne nach Abschaltung der allgemeinen Stromversorgung des Leckdetektors (1) durch das Zusatzpumpmittel (10) abgesenkt wird, wobei eine Stromversorgung durch eine Batterie des Leckdetektors (1) oder durch ein Mittel zur Rückgewinnung der kinetischen Energie des Leckdetektors (1), das dazu fähig ist, die kinetische Rotationsenergie des Rotors der Turbomolekular-Vakuumpumpe (9) in Form von elektrischer Energie wiederzugewinnen, bereitgestellt wird (Wiedereinschaltphase 106).

## Claims

1. Leak detector (1) for leak-testing objects that are to be tested by spraying tracer gas, the leak detector (1) comprising:
- a detection inlet (2) intended to be connected to an object that is to be tested,
- a pumping device (3) comprising:
- a vacuum line (7) connected to the detection inlet (2),
- a rough-vacuum pump (8) connected to the vacuum line (7), and comprising a plurality of pumping stages (T1-T5) mounted in series, and
- a turbomolecular vacuum pump (9) connected to the vacuum line (7) and the delivery of which is connected to the rough-vacuum pump (8),
- a gas detector (4) connected to the turbomolecular vacuum pump (9),
**characterized in that** the pumping device (3) comprises an ancillary pumping means (10) connected to an inter-stage canal (C1-C4) of the rough-vacuum pump (8) to lower the ultimate-vacuum pressure of tracer gas in the rough-vacuum pump (8).

2. Leak detector (1) according to the preceding claim, **characterized in that** it comprises a pressure sensor (5) configured to measure the pressure in the vacuum line (7) and a control unit (6) connected to the pressure sensor (5), the pumping device (3) comprising an ultimate-vacuum electrically-operated valve (11) controllable by the control unit (6), the ultimate-vacuum electrically-operated valve (11) connecting the ancillary pumping means (10) to the rough-vacuum pump (8), the control unit (6) being further configured to command the opening of the ultimate-vacuum electrically-operated valve (11) when the pressure measured by the pressure sensor (5) is below or equal to a low-pressure threshold.

3. Leak detector (1) according to either of the preceding claims, **characterized in that** the inter-stage canal (C4) connects the penultimate pumping stage (T4) of the rough-vacuum pump (8) to the last pumping stage (T5) of the rough-vacuum pump (8).

4. Leak detector (1) according to one of the preceding claims, **characterized in that** it comprises a purge device (19) connected as a bypass of the ultimate-vacuum electrically-operated valve (11) on the inter-stage canal (C4) .

5. Leak detector (1) according to one of the preceding claims, **characterized in that** the ancillary pumping means (10) comprises at least one ancillary pump (18), such as a diaphragm pump.

6. Leak detector (1) according to one of Claims 1 to 4, **characterized in that** the ancillary pumping means (10) comprises a vacuum reservoir (21), an ultimate-vacuum electrically-operated valve (11) interposed between the vacuum reservoir (21) and the rough-vacuum pump (8) and a vacuum-creating electrically-operated valve (22) interposed between the vacuum reservoir (21) and the intake (12) of the rough-vacuum pump (8), the ultimate-vacuum electrically-operated valve (11) and vacuum-creating electrically-operated valve (22) being controllable by a control unit (6) of the leak detector (1) .

7. Leak detection method (100) for leak-testing objects that are to be tested by spraying tracer gas, which is implemented in a leak detector (1) according to one of the preceding claims, wherein the ultimate-vacuum pressure of tracer gas in the rough-vacuum pump (8) is lowered using the ancillary pumping means (10).

8. Leak detection method (100) according to the preceding claim, wherein the opening of an ultimate-vacuum electrically-operated valve (11) connecting the ancillary pumping means (10) to the rough-vacuum pump (8) is commanded in order to lower the ultimate-vacuum pressure of tracer gas in the rough-vacuum pump (8) using the ancillary pumping means (10) when the pressure measured in the vacuum line (7) is below or equal to a low-pressure threshold below or equal to 100 Pa, such as of the order of 50 Pa (detection step 103).

9. Leak detection method (100) according to either of Claims 7 and 8, wherein upon the start-up of the leak detector (1) the pressure in the vacuum line (7) is lowered using the rough-vacuum pump (8) and using an ancillary pump (18) of the ancillary pumping means (10) (start-up step 101).

10. Leak detection method (100) according to one of Claims 7 to 9 considered in combination with Claim 8, wherein the rotational speed of the rough-vacuum pump (8) is reduced when the leak detector (1) is not used for a period of time longer than a predefined period of time and the opening of the ultimate-vacuum electrically-operated valve (11) is commanded (standby step 104).

11. Leak detection method (100) according to one of Claims 7 to 10, **characterized in that** the ultimate-vacuum pressure in the rough-vacuum pump (8) is lowered using the ancillary pumping means (10) for a predefined period of time after the overall supply to the leak detector (1) is cut off, a supply being furnished by a battery of the leak detector (1) or by a kinetic energy recovery means of the leak detector (1) able to recover the kinetic energy of rotation of the rotor of the turbomolecular vacuum pump (9) in the form of electrical energy (restart step 106).
